# EUROPÄISCHE PATENTSCHRIFT

(11) **EP 3 315 796 B1**
(45) Veröffentlichungstag und Bekanntmachung des Hinweises auf die Patenterteilung: **02.12.2020**
(21) Anmeldenummer: 16195730.3
(22) Anmeldetag: 26.10.2016
(51) Int. Cl.: F16B 19/10

(54) **BLINDNIET**
BLIND RIVET
RIVET AVEUGLE

(43) Veröffentlichungstag der Anmeldung: 02.05.2018
(73) Patentinhaber: GESIPA Blindniettechnik GmbH, 64546 Mörfelden-Walldorf (DE)
(72) Erfinder: Gärtner, Richard, 64546 Mörfelden-Walldorf (DE); Neidhardt, Christopher, 64546 Mörfelden-Walldorf (DE); Schulz, Alexander, 64546 Mörfelden-Walldorf (DE)
(74) Vertreter: Keil & Schaafhausen Patentanwälte PartGmbB

(56) Entgegenhaltungen:
- DE-A1-102014 101 110
- DE-U1- 8 912 382
- FR-A1- 2 712 940

## Beschreibung

Die Erfindung betrifft einen Blindniet mit den Merkmalen des Oberbegriffs des Anspruchs 1.

Eine derartige Blindniet ist aus DE 89 12 382 U1 bekannt.

Ein derartiger Blindniet wird beispielsweise verwendet, um zwei Fügeelemente miteinander zu verbinden, beispielsweise zwei plattenartige Elemente. Zu diesem Zweck werden die beiden Fügeelemente mit überlappenden Bohrungen versehen. Die Niethülse wird durch die Bohrungen geführt, bis der Setzkopf an einem der Fügeelemente anliegt. Danach wird ein Zug auf den Zugdorn ausgeübt, was bewirkt, dass sich am Schließkopfende des Schaftes ein Schließkopf ausbildet. Bei einem weiteren Aufbringen der Zugkraft auf den Nietdorn reißt der Nietdorn ab und der Setzvorgang des Blindniets ist beendet.

Die Verbindung von Fügeelementen mit Hilfe von Blindnieten hat sich in vielen Fällen als günstig und praktikabel erwiesen, insbesondere bei Verbindungsaufgaben, bei denen die "Blindseite" für den Werker nicht zugänglich ist.

Allerdings ergibt sich bei manchen Verbindungsaufgaben das Problem, dass eines oder mehrere Fügeelemente beim Setzen des Blindniets beschädigt werden. Dies ist insbesondere dann zu beobachten, wenn der Werkstoff der Fügeelemente aus einem Kunststoff oder einem weichen Metall, wie Aluminium oder Kupfer, besteht.

Der Erfindung liegt die Aufgabe zugrunde, einen Blindniet anzugeben, der für eine Vielzahl von Anwendungsfällen geeignet ist.

Diese Aufgabe wird mit einem Blindniet mit den Merkmalen des Anspruchs 1 gelöst.

Bei einem Blindniet gibt es üblicherweise einen minimalen Klemmbereich. Dieser Klemmbereich definiert die Dicke des Fügeelements oder der aufeinander gelegten Fügeelemente, in die der Blindniet eingesetzt werden soll, um eine Verbindung zu bewirken. Wenn die Fügeelemente in Summe eine geringere Dicke haben, dann besteht das erhebliche Risiko, dass der Schließkopf nicht richtig ausgebildet wird und nicht ausreichend auf dem Fügeelement aufliegt. Der minimale Klemmbereich des Blindniets ist in der Regel angegeben. Wenn man nun den Schaft mit einem Verstärkungsbereich versieht, der sich maximal bis zum minimalen Klemmbereich des Blindniets erstreckt, dann verhindert man, dass sich der Schaft im Verstärkungsbereich innerhalb des Fügeelements radial aufweitet und dadurch das Fügeelement beschädigt wird. Auf der anderen Seite kann die Umformenergie, die sich bei dem Zug auf den Zugdorn ergibt, vollständig in das verbleibende Schließkopfende eingeleitet werden, so dass sich der Schaft nur am Schließkopfende umformt und man somit sicherstellen kann, dass ein relativ großer Schließkopf erzeugt wird. Bei einem großen Schließkopf ergibt sich eine geringe Flächenpressung. Auch dies trägt dazu bei, das Risiko einer Beschädigung des oder der Fügeelemente klein zu halten. Der Verstärkungsbereich kann auch verwendet werden, um den Nietdorn zu führen. Der Umformabschnitt weist eine Vertiefung auf. Diese Vertiefung ist auf der radialen Außenseite des Umformabschnitts ausgebildet und kann ebenfalls eine Art "Scharnierwirkung" für die Ausbildung des Schließkopfs haben. Die Vertiefung kann in Umfangsrichtung durchgehend ausgebildet sein. Es ist allerdings auch möglich, dass zwischen einzelnen Abschnitten der Vertiefung in Umfangsrichtung kleine Stege stehen bleiben, was in manchen Fällen werkzeugbedingt nicht zu vermeiden ist oder auch bewusst vorgesehen sein kann. In Abhängigkeit von der gewählten Herstellungsart kann die Vertiefung mehrere Funktionen oder Wirkungen haben. Die Vertiefung kann beispielsweise dazu führen, dass sich der Schaft an den Nietdorn anlegt und so verhindert, dass der Nietdorn ohne weiteres aus der Niethülse herausgezogen werden kann. Die Vertiefung bewirkt also eine Art "Verliersicherung". Ein dem Setzkopf benachbartes Ende eines Bodens der Vertiefung ist am minimalen Klemmbereich des Blindniets angeordnet ist. Der Boden der Vertiefung kann beispielsweise parallel zur Umfangswand des Schaftes verlaufen. Er kann aber auch konvex oder konkav gekrümmt sein. Durch die Anordnung des dem Setzkopf benachbarten Ende des Bodens am minimalen Klemmbereich wird hier sozusagen eine definierte Position für ein Scharnier zur Verfügung gestellt, an der sich dann der Schließkopf radial nach außen umformen kann.

Vorzugsweise ist die Entfernung um mindestens 2,5 % des Außendurchmessers des Schaftes kleiner als der minimale Klemmbereich. Damit ergibt sich ein gutes Umformverhalten für den Schließkopf. Der Schaft kann sich bereits innerhalb des Fügeelements geringfügig radial nach außen umbiegen, um den Schließkopf auszubilden. Der Bereich jenseits des Verstärkungsbereichs bildet also eine Art Scharnier für die Ausbildung des Setzkopfs.

Bevorzugterweise weist der Verstärkungsbereich eine größere Wanddicke auf als ein sich an den Verstärkungsbereich auf der dem Setzkopf abgewandten Seite anschließender Umformabschnitt des Schaftes. Der Begriff "Umformabschnitt" wird hier aus Gründen der Einfachheit verwendet. Im Umformabschnitt findet die Umformung zur Ausbildung des Schließkopfs statt. Dabei muss sich allerdings nicht der komplette Umformabschnitt umformen. Dies wird lediglich dann der Fall sein, wenn das Fügegut tatsächlich eine Dicke aufweist, die dem minimalen Klemmbereich entspricht. Ansonsten ist es auch möglich, dass sich nur ein Teil des Umformbereichs beim Ausbilden des Schließkopfs umformt.

Hierbei ist bevorzugt, dass der Schaft im Verstärkungsbereich eine Wandstärke aufweist, die um 2 % bis 10 % des Außendurchmessers des Schaftes dicker ist als eine Wandstärke des Umformabschnitts. Man kann beispielsweise eine Stufe zwischen dem Verstärkungsbereich und dem Umformabschnitt vorsehen, wobei die radiale Höhe der Stufe 2 % bis 10 % des Außendurchmessers des Schaftes beträgt.

Vorzugsweise geht die Vertiefung über eine zum Setzkopf hin ansteigende erste Rampe in den Außenumfang des Schaftes über. Damit wird auch der Verstärkungsbereich an seiner radialen Außenseite mit einer Einprägung versehen, die dazu verwendet werden kann, den Verstärkungsbereich an dem Nietdorn zur Anlage zu bringen. Dies ergibt eine noch bessere Führung des Nietdorns im Verstärkungsbereich.

Auch ist von Vorteil, wenn die Vertiefung über eine zum Schließkopfende hin ansteigende zweite Rampe in den Außenumfang des Schaftes übergeht. Damit ergibt sich beim Umformen des Schaftes zum Schließkopf eine günstige Spannungsverteilung.

Vorzugsweise ist der Schaft im Bereich des Bodens der Vertiefung kaltverfestigt. Dies lässt sich beispielsweise dadurch erreichen, dass das Einbringen der Vertiefung volumenkonstant erfolgt, im Bereich der Vertiefung also das Material des Schaftes verdichtet wird. Damit ergibt sich eine verbesserte Scharnierwirkung bei der Ausbildung des Schließkopfes.

Bevorzugterweise weist der Schaft mit einem vorbestimmten Abstand zum Setzkopfende eine Einprägung auf. Die Begriffe "Einprägung" und "Vertiefung" wurden gewählt, um hier eine einfache Unterscheidung vornehmen zu können. Auch die Vertiefung kann als Einprägung ausgebildet sein. Die Ausbildung der Einprägung mit einem gewissen Abstand zum Setzkopfende stellt am Schließkopfende ebenfalls ein "Scharnier" für die Ausbildung des Schließkopfes zur Verfügung. Dabei kann ein Abschnitt des Schaftes, der sich an das Schließkopfende anschließt, seine zylindrische Form behalten. Der Blindniet ist dann als "Hülsenfalter" ausgebildet, also nicht als "Hülsenweiter". Dies bedeutet, dass der Nietdorn mit seinem Nietdornkopf außen am Schließkopf verbleibt und dort sichtbar ist. Dies kann man, falls gewünscht, für eine ansprechende optische Gestaltung ausnutzen.

In einer bevorzugten Ausgestaltung ist vorgesehen, dass der Abstand der Wandstärke des Umformabschnitts ± 15 % entspricht. Der Abstand hat also eine Größe, die im Bereich von 85 % der Wandstärke bis 115 % der Wandstärke des Umformabschnitts liegt.

Vorteilhafterweise steigt die Einprägung mit einer dritten Rampe zum Setzkopf hin an. Auch dies trägt dazu bei, beim Ausbilden des Schließkopfs eine günstige Spannungsverteilung zu erreichen.

Vorzugsweise weist der Nietdorn einen Nietdornkopf auf, der auf seiner dem Schaft zugewandten Seite einen negativen Sturz aufweist. Wenn eine Zugkraft auf den Nietdorn ausgeübt wird, dann zieht der negative Sturz das schließkopfseitige Ende des Schaftes radial nach innen, so dass eine radiale Aufweitung des Schafts am schließkopfseitigen Ende verhindert werden kann.

Vorzugsweise weist der negative Sturz eine Steigung im Bereich von 2 % bis 6 % auf. Diese Steigung ist zwar relativ gering. Sie reicht aber aus, um das schließkopfseitige Ende des Schaftes radial nach innen zu ziehen.

Bevorzugterweise weist der Nietdornkopf eine kugelförmige Außenseite auf. Die Außenseite des Nietdornkopfes entspricht also einem Teil einer Kugeloberfläche. In einer bevorzugten Ausgestaltung bildet der Nietdornkopf zumindest annähernd eine Halbkugel. Unabhängig vom konkreten Radius der kugelförmigen Außenseite ergibt sich in der Regel ein ästhetisch gefälliges Äußeres. Darüber hinaus wird die Lochfindung erleichtert, d.h. man kann den Blindniet leichter in die überlappenden Bohrungen der Fügeelemente einführen.

Die Erfindung wird im Folgenden anhand von bevorzugten Ausführungsbeispielen in Verbindung mit der Zeichnung beschrieben. Hierin zeigen:
- Fig. 1: einen Blindniet, der zwei Fügeelemente miteinander verbindet,
- Fig. 2: den Blindniet nach Fig. 1, der zwei andere Fügeelemente miteinander verbindet und
- Fig. 3: eine schematische Darstellung eines Blindniets im ungesetzten Zustand.

In allen Figuren sind gleiche und einander entsprechende Elemente mit den gleichen Bezugszeichen versehen. Die Zeichnung ist nicht maßstäblich zu verstehen.

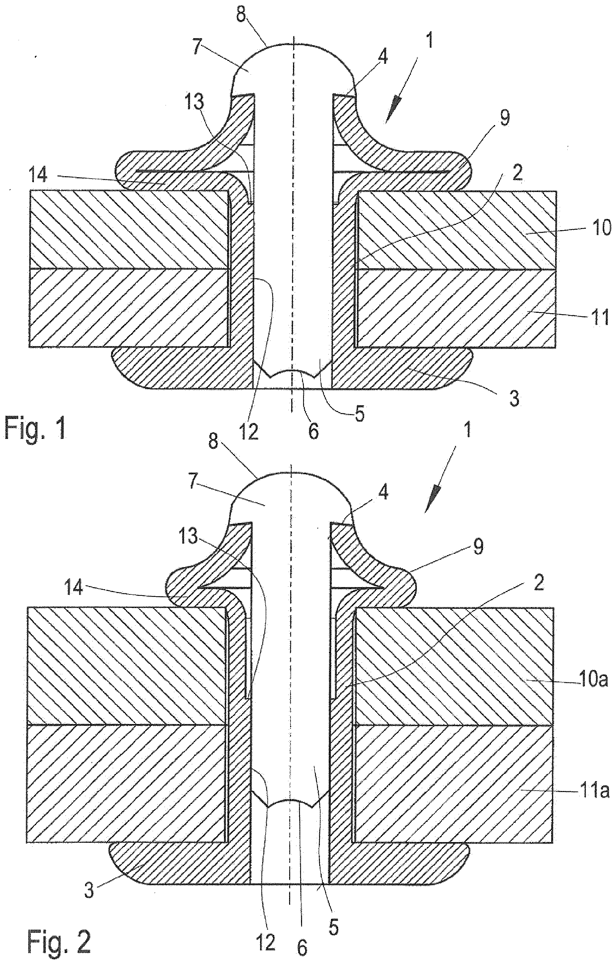

Fig. 1 zeigt einen Blindniet 1 im gesetzten Zustand. Der Blindniet 1 weist eine Niethülse auf, die einen Schaft 2, einen Setzkopf 3 und ein Schließkopfende 4 aufweist. Ferner weist der Blindniet 1 einen Nietdorn 5 auf, der im gesetzten Zustand abgerissen ist und ein abgerissenes Ende 6 aufweist. Das abgerissene Ende 6 befindet sich innerhalb der Niethülse.

Der Nietdorn 5 weist einen Nietdornkopf 7 auf. Der Nietdornkopf 7 liegt sowohl im ungesetzten als auch im gesetzten Zustand des Blindniets 1 am Schließkopfende 4 der Niethülse an. Der Nietdornkopf 7 weist eine abgerundete oder kugelförmige Außenseite 8 auf. Er kann so gestaltet werden, dass er ästhetischen Ansprüchen genügt. Darüber hinaus wird Lochfindung erleichtert.

Da der Nietdornkopf 7 immer außen am Schließkopfende 4 des Schafts 2 oder der Niethülse anliegt, bildet der Blindniet 1 einen so genannten "Hülsenfalter", bei dem der Nietdorn das Schließkopfende 4 zu einem Schließkopf 9 faltet, jedoch nicht, wie bei einem "Hülsenweiter" in den Schließkopf einschlüpft.

Der Blindniet 1 verbindet im vorliegenden Ausführungsbeispiel zwei Fügeelemente 10, 11. Die Fügeelemente 10, 11 haben gemeinsam eine Dicke, die einen minimalen Klemmbereich des Blindniets definiert. Der minimale Klemmbereich des Blindniets ist üblicherweise auf der Verpackung des Blindniets angegeben. Er sollte nicht unterschritten werden, weil ansonsten eine zuverlässige und zufriedenstellende Ausbildung des Schließkopfs 9 nicht möglich wäre.

Wie man in Fig. 1 erkennen kann, weist der Schaft zwischen dem Setzkopf 3 und dem Schließkopfende 4 einen Verstärkungsbereich 12 auf, der sich maximal bis zu einer Entfernung vom Setzkopf 3 erstreckt, die dem minimalen Klemmbereich des Blindniets entspricht. Es ist sogar von Vorteil, wenn der Verstärkungsbereich 12 eine kleine Strecke vor dem minimalen Klemmbereich endet. Diese kleine Strecke sollte mindestens 2,5 % des Außendurchmessers des Schaftes betragen. Wenn beispielsweise der Schaft 2 einen Außendurchmesser von 4,8 mm hat, dann endet der Verstärkungsbereich 7 etwa 0,12 mm unterhalb des Klemmbereichs. Dieser Abstand ist in Fig. 1 übertrieben groß dargestellt. Es ist aber zu erkennen, dass der Verstärkungsbereich 12 mit einer Stufe 13 endet.

Der Verstärkungsbereich 12 ist dadurch gebildet, dass der Schaft 2 hier eine größere Wanddicke aufweist als ein sich auf der dem Setzkopf 3 abgewandten Seite anschließender Umformabschnitt 14, der später ganz oder teilweise den Schließkopf 9 ausbildet.

In einer bevorzugten Ausgestaltung weist der Schaft 2 im Verstärkungsbereich 12 eine Wanddicke auf, die um 7 % bis 13 % des Außendurchmessers des Schaftes 2 dicker ist als eine Wanddicke des Umformabschnitts.

Fig. 2 zeigt eine Situation, in der der gleiche Blindniet 1 verwendet wird, um dickere Fügeelemente 10a, 11a miteinander zu verbinden. Dies ist bis zu einer gewissen Grenze ohne weiteres möglich. Auch hier bildet sich dann ein Schließkopf 9 aus.

Durch den Verstärkungsbereich wird verhindert, dass sich bei der Ausbildung des Schließkopfs 9 der Schaft 2 radial aufweitet, was zu Problemen führen könnte, wenn die Fügeelemente 10, 11 bzw. 10a, 11a nur eine geringe Widerstandskraft haben, wie dies beispielsweise bei Aluminium oder anderen Leicht- oder Buntmetallen oder bei einem Kunststoff, auch einem faserverstärkten Kunststoff, der Fall sein kann.

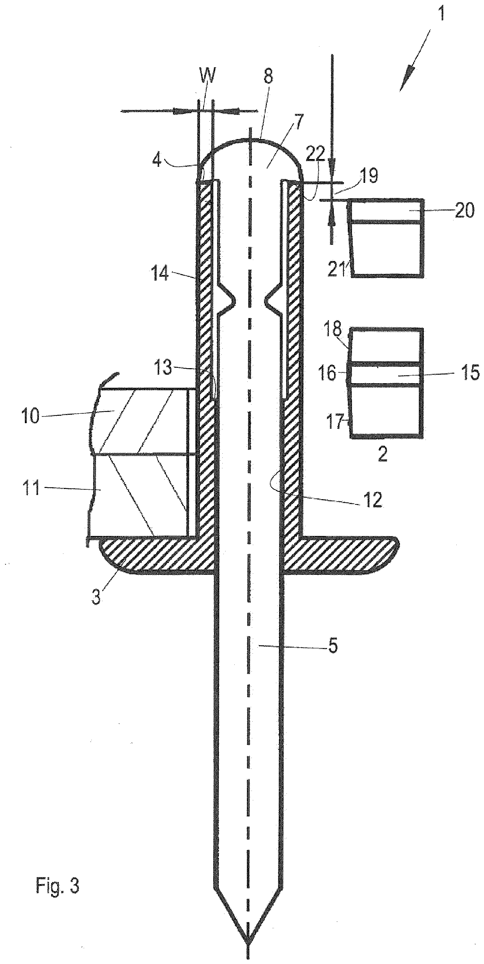

Fig. 3 zeigt den Blindniet 1 im ungesetzten Zustand mit weiteren Einzelheiten. So ist schematisch dargestellt, dass der Umformabschnitt 14 eine Vertiefung 15 aufweist, deren dem Setzkopf 3 benachbartes Ende am minimalen Klemmbereich des Blindniets 1 angeordnet ist. Der minimale Klemmbereich ist, wie dies im Zusammenhang mit Fig. 1 erläutert worden ist, die gemeinsame Dicke der beiden Fügeelemente 10, 11. Die Vertiefung 15 weist einen Boden 16 auf, der über eine zum Setzkopf hin ansteigende erste Rampe 17 in den Außenumfang des Schaftes 2 übergeht. Die Rampe 17 hat beispielsweise eine Steigung von 4°. Möglich ist eine Steigung im Bereich von 3° bis 15°. Die Rampe 17 überbrückt die Stufe 13 zwischen dem Verstärkungsbereich 12 und dem Umformungsbereich 14. Die Rampe 17 muss nicht geradlinig ansteigen. Sie kann auch eine Krümmung oder sogar kleine Wellen oder Stufen aufweisen.

Die Vertiefung 15 und die erste Rampe 17 können durch ein Prägen gebildet sein, bei dem die Wand 2 sowohl komprimiert als auch radial etwas nach innen verformt wird. Dies hat zur Folge, dass der Nietdorn 5 im Schaft sozusagen festgeklemmt wird. Darüber hinaus kann das Material des Schaftes im Bereich der Einprägung 15 und auch im Bereich der ersten Rampe 17 durch das Einprägen kaltverfestigt werden.

Der Boden 16 geht über eine zum Schließkopfende 4 hin ansteigende zweite Rampe 18 in den Außenumfang des Schaftes 2 über. Die zweite Rampe 18 kann beispielsweise eine Steigung von 5° haben. Möglich sind Steigungen von 4° bis 16°. Die Steigung der zweiten Rampe 18 ist vorzugsweise größer als die Steigung der ersten Rampe 17. Ansonsten gilt für die zweite Rampe 18 das Gleiche wie für die erste Rampe 17.

Die Vertiefung 15 bildet dann eine Art Scharnier, an dem der Schaft 2 radial nach außen umgebogen und aufgeweitet werden kann, um den Schließkopf 9 zu bilden. Die beiden Rampen 17, 18 sorgen dafür, dass keine unerwünschten Spannungsspitzen bei dieser Umformung auftreten.

Der Schaft 2 kann weiterhin mit einem vorbestimmten Abstand 19 zum Setzkopfende 4 eine Einprägung 20 aufweisen. Auch im Bereich der Einprägung 20 kann der Schaft 2 kaltverfestigt sein. Die Einprägung steigt mit einer dritten Rampe 21 zum Setzkopf 3 hin an. Für die dritte Rampe 21 gilt das Gleiche wie für die zweite Rampe 18. Die Einprägung 20 bildet dann ein weiteres "Scharnier", an dem sich der Schaft radial nach außen umbiegen lässt, wenn der Schließkopf 9 ausgebildet wird.

Der Nietdornkopf 7 weist einen negativen Sturz 22 auf seiner dem Schaft 2 zugewandten Seite auf. Der Sturz kann beispielsweise eine Steigung von 2° bis 6° haben. Dieser negative Sturz 22 führt dazu, dass das Setzkopfende 4 des Schaftes 2 bei einer Zugkraftbeaufschlagung durch den Nietdornkopf 7 radial nach innen gezogen wird, so dass man mit großer Zuverlässigkeit verhindern kann, dass der Nietdornkopf 7 in den Schaft 2 hineinschlüpft.

Die Vertiefung 20 hat einen Abstand 19 vom Schließkopfende 4, der der Wandstärke W des Schafts 2 am Schließkopfende 4 entspricht, wobei eine Abweichung von ± 15 % zulässig ist.

## Patentansprüche

1. Blindniet mit einer Niethülse (1), die einen Schaft (2), einen Setzkopf (3) und ein Schließkopfende (4) aufweist, und einem Nietdorn (5) mit einem Nietdornkopf (7), wobei der Schaft (2) zwischen dem Setzkopf (3) und dem Schließkopfende (4) einen Verstärkungsbereich (12) aufweist, **dadurch gekennzeichnet, dass** sich der Verstärkungsbereich maximal bis zu einer Entfernung vom Setzkopf (3) erstreckt, die einem minimalen Klemmbereich des Blindniets (1) entspricht, wobei der Verstärkungsbereich (12) eine größere Wanddicke als ein sich an den Verstärkungsbereich (12) auf der dem Setzkopf (3) abgewandten Seite anschließender Umformabschnitt (14) des Schaftes (2) aufweist, der Umformabschnitt (14) eine Vertiefung (15) auf seiner radialen Außenseite aufweist und ein dem Setzkopf benachbartes Ende eines Bodens (16) der Vertiefung (15) am minimalen Klemmbereich des Blindniets (1) angeordnet ist.

2. Blindniet nach Anspruch 1, **dadurch gekennzeichnet, dass** die Entfernung um mindestens 2,5 % des Außendurchmessers des Schaftes (2) kleiner ist als der minimale Klemmbereich.

3. Blindniet nach Anspruch 1 oder 2, **dadurch gekennzeichnet, dass** der Schaft (2) im Verstärkungsbereich (12) eine Wandstärke aufweist, die um 2 % bis 10 % des Außendurchmessers des Schaftes (2) dicker ist als eine Wandstärke des Umformabschnitts (14).

4. Blindniet nach einem der Ansprüche 1 bis 3, **dadurch gekennzeichnet, dass** die Vertiefung (15) über eine zum Setzkopf (3) hin ansteigende erste Rampe (17) in den Außenumfang des Schaftes (2) übergeht.

5. Blindniet nach Anspruch 4, **dadurch gekennzeichnet, dass** die Vertiefung (15) über eine zum Schließkopfende (4) hin ansteigende zweite Rampe (18) in den Außenumfang des Schaftes (2) übergeht.

6. Blindniet nach einem der Ansprüche 1 bis 5, **dadurch gekennzeichnet, dass** der Schaft (2) im Bereich des Bodens (16) der Vertiefung (15) kaltverfestigt ist.

7. Blindniet nach einem der Ansprüche 1 bis 6, **dadurch gekennzeichnet, dass** der Schaft (2) mit einem vorbestimmten Abstand (19) zum Setzkopfende (4) eine Einprägung (20) aufweist.

8. Blindniet nach Anspruch 7, **dadurch gekennzeichnet, dass** der Abstand (19) der Wandstärke des Umformabschnitts (14) ± 15 % entspricht.

9. Blindniet nach Anspruch 8, **dadurch gekennzeichnet, dass** die Einprägung (20) mit einer dritten Rampe (21) zum Setzkopf (3) hin ansteigt.

10. Blindniet nach einem der Ansprüche 1 bis 9, **dadurch gekennzeichnet, dass** der Nietdorn (5) einen Nietdornkopf (7) aufweist, der auf seiner dem Schaft (2) zugewandten Seite einen negativen Sturz (22) aufweist.

11. Blindniet nach Anspruch 10, **dadurch gekennzeichnet, dass** der negative Sturz (22) eine Steigung im Bereich von 2° bis 6° aufweist.

12. Blindniet nach Anspruch 10 oder 11, **dadurch gekennzeichnet, dass** der Nietdornkopf (7) eine kugelförmige Außenseite (8) aufweist.

## Claims

1. A blind rivet with a rivet sleeve (1) which has a shank (2), a setting head (3) and a closing head end (4), and with a rivet mandrel (5) with a rivet mandrel head (7), wherein the shank (2) has a reinforcing region (12) between the setting head (3) and the closing head end (4), **characterized in that** the reinforcing region extends at most up to a distance from the setting head (3) which corresponds to a minimum clamping region of the blind rivet (1), wherein the reinforcing region (12) has a greater wall thickness than a deformation portion (14) of the shank (2) adjoining the reinforcing region (12) on the side facing away from the setting head (3), the deformation portion (14) has a recess (15) on its radially outer side and an end of a bottom (16) of the recess (15) adjacent to the setting head is arranged at the minimum clamping region of the blind rivet (1).

2. The blind rivet according to claim 1, **characterized in that** the distance is smaller by at least 2.5% of the outer diameter of the shank (2) than the minimum clamping region.

3. The blind rivet according to claim 1 or 2, **characterized in that** in the reinforcing region (12), the shank (2) has a wall thickness which is thicker by 2% to 10% of the outer diameter of the shank (2) than a wall thickness of the deformation portion (14).

4. The blind rivet according to any one of claims 1 to 3, **characterized in that** the recess (15) transitions into the outer circumference of the shank (2) via a first ramp (17) ascending towards the setting head (3).

5. The blind rivet according to claim 4, **characterized in that** the recess (15) transitions into the outer circumference of the shank (2) via a second ramp (18) ascending towards the closing head end (4).

6. The blind rivet according to any one of claims 1 to 5, **characterized in that** the shank (2) is work-hardened in the region of the bottom (16) of the recess (15).

7. The blind rivet according to any one of claims 1 to 6, **characterized in that** the shank (2) has an indentation (20) at a predetermined distance (19) from the setting head end (4).

8. The blind rivet according to claim 7, **characterized in that** the distance (19) corresponds to the wall thickness of the deformation portion (14) ± 15%.

9. The blind rivet according to claim 8, **characterized in that** the indentation (20) ascends with a third ramp (21) towards the setting head (3).

10. The blind rivet according to any one of claims 1 to 9, **characterized in that** the rivet mandrel (5) has a rivet mandrel head (7) which has a negative camber (22) on its side facing the shank (2).

11. The blind rivet according to claim 10, **characterized in that** the negative camber (22) has a gradient in the range of 2° to 6°.

12. The blind rivet according to claim 10 or 11, **characterized in that** the rivet mandrel head (7) has a spherical outer side (8).

## Revendications

1. Rivet aveugle avec un manchon de rivet (1) qui comporte une queue (2), une tête de pose (3) et un embout de tête de fermeture (4) et une tige de rivet (5) avec une tête de tige de rivet (7), sachant que la queue (2) comporte une zone de renfort (12) entre la tête de pose (3) et l'embout de tête de fermeture (4), **caractérisé en ce que** la zone de renfort s'étend au maximum jusqu'à une distance de la tête de pose (3), qui correspond à une zone de serrage minimale du rivet aveugle (1), sachant que la zone de renfort (12) comporte une épaisseur de paroi plus grande qu'une section de déformation (14) de la queue (2) se raccordant à la zone de renfort (12) sur le côté opposé à la tête de pose (3), la section de déformation (14) comporte une cavité (15) sur son côté extérieur radial et une extrémité voisine de la tête de pose d'un fond (16) de la cavité (15) est disposée sur la zone de serrage minimale du rivet aveugle (1).

2. Rivet aveugle selon la revendication 1, **caractérisé en ce que** la distance est plus petite d'au moins 2,5 % du diamètre extérieur de la queue (2) que la zone de serrage minimale.

3. Rivet aveugle selon la revendication 1 ou 2, **caractérisé en ce que** la queue (2) comporte une épaisseur de paroi dans la zone de renfort (12) qui est de 2% à 10% du diamètre extérieur de la queue (2) plus épaisse qu'une épaisseur de paroi de la section de déformation (14).

4. Rivet aveugle selon l'une quelconque des revendications 1 à 3, **caractérisé en ce que** la cavité (15) passe par une première rampe (17) montant vers la tête de pose (3) dans la périphérie extérieure de la queue (2).

5. Rivet aveugle selon la revendication 4, **caractérisé en ce que** la cavité (15) passe par une deuxième rampe (18) montant vers l'embout de tête de fermeture (4) dans la périphérie extérieure de la queue (2).

6. Rivet aveugle selon l'une quelconque des revendications 1 à 5, **caractérisé en ce que** la queue (2) est écrouie dans la zone du fond (16) de la cavité (15).

7. Rivet aveugle selon l'une quelconque des revendications 1 à 6, **caractérisé en ce que** la queue (2) comporte une empreinte (20) avec une distance (19) prédéterminée par rapport à l'embout de tête de pose (4).

8. Rivet aveugle selon la revendication 7, **caractérisé en ce que** la distance (19) correspond à ± 15% à l'épaisseur de paroi de la section de déformation (14).

9. Rivet aveugle selon la revendication 8, **caractérisé en ce que** l'empreinte (20) augmente avec une troisième rampe (21) vers la tête de pose (3).

10. Rivet aveugle selon l'une quelconque des revendications 1 à 9, **caractérisé en ce que** la tige de rivet (5) comporte une tête de tige de rivet (7), qui comporte sur son côté tourné vers la queue (2) un décrochement négatif (22).

11. Rivet aveugle selon la revendication 10, **caractérisé en ce que** le décrochement négatif (22) comporte une pente de l'ordre de 2° à 6°.

12. Rivet aveugle selon la revendication 10 ou 11, **caractérisé en ce que** la tête de tige de rivet (7) comporte un côté extérieur sphérique (8).
